# EUROPEAN PATENT SPECIFICATION

(11) **EP 3 735 823 B1**
(45) Date of publication and mention of the grant of the patent: **23.03.2022**
(21) Application number: 20167880.2
(22) Date of filing: 03.04.2020
(51) Int. Cl.: A01G 17/02

(54) **LEAF-REMOVER HEAD**
ENTLAUBERKOPF
TÊTE D'EFFEUILLEUSE

(30) Priority: 06.05.2019 IT 201900006544
(43) Date of publication of application: 11.11.2020
(73) Proprietor: ML Macchine di De Giovanelli Mirco, 38034 Cembra Lisignago (TN) (IT)
(72) Inventor: De Giovanelli, Mirco, 38034 Cembra Lisignago TN (IT)
(74) Representative: Muraro, Alfeo Federico

(56) References cited:
- EP-A1- 2 820 940
- FR-A1- 2 924 571
- US-A- 4 175 368

## Description

### Field of application

The present invention is generally applicable to the technical field of agricultural machinery. In particular, the invention has as its object a leaf-remover head, in particular of the air-jet kind, to be applied to an agricultural machine.

### State of the Art

As it is known, devices exist, commonly known as leaf-remover head, that are mounted on agricultural machines and whose operation allows to cause detachment of the light parts of the plants, particularly the leaves, hence preserving the fruit thereof. The operation just described is accomplished mainly for vine plants, with the aims to favor the air circulation next to the fruits and to increase exposition of the latter to the solar light.

According to a known technique, a leaf-remover head comprises one or more rigid tubular ducts branching off from a central rotor according to corresponding directions that are substantially radial, and at whose ends are fixed corresponding nozzles. The ducts are connected at the opposite ends thereof to a pressurized air feed unit that generates an air flow that the ducts convey towards the nozzles and, from there, to the outside towards the plants to be defoliated according to directions that are incident to the ducts.

Moreover, the rotor is carried in rotation by a motor around a rotation axis that is substantially orthogonal to the ducts, in such a way that the leaves are hit by an intermittent air flow that causes them to detach from the plant.

A first drawback of the above described leaf-remover head concerns the fact that the ducts are provided with section areas that are substantially equal, or slighly bigger, than the section areas of the nozzles, hence generating considerable pressure drops. As a consequence, the pressure of the feeding air needs to be relatively high in order to ensure the required air flow, with the effect that the power consumption of the agricultural machine is consequently high.

An additional drawback of the leaf-remover heads of the kind above described is that, due to the high rotational speed, the rotating nozzles may cause damages in case of accidental contacts between the nozzles themselves and the plant, or worse, the fruits.

For the same reason, the nozzles may constitute a risk for the operators that are in the vicinity of the leaf-remover head, who may suffer injuries.

In the attempt of avoiding the last two drawbacks above mentioned, it is known to arrange protection plates facing the nozzles, the plates being provided with holes for the passage of the air.

The above plates has the drawback to increase the weight and the complexity of the leaf-remover head.

Moreover, the leaves or the branches of the plants may get caught on the holes of the protection plates and be ripped off. If, additionally, the leaves or the branches get caught between the holes and the rapidly rotating nozzles, they may damage the leaf-remover head.

Clearly, the risks just mentioned concern the operators as well.

Documents EP 2 820 940 A1, FR 2 924 571 A1 and US 4 175 368 disclose leaf-removing heads of known types.

### Summary of the invention

The present invention aims at overcoming, at least partially, the above mentioned drawbacks of the prior art.

In particular, it is an aim of the invention to make a leaf-remover head for agricultural use whose energy consumption is limited compared to the leaf-remover heads of known kind with same performances, particularly with same air flow rate.

It is another aim of the invention to reduce the risks of injury for the operators, as well as of damage for plants and fruits, in case they come into contact with the leaf-remover head during its operation.

It is also an aim of the invention to render the leaf-remover head constructively simple, so that it can be produced at a lower cost compared to the leaf-remover heads of known types with same performances.

The above mentioned aims are achieved by a leaf-remover head according to the main claim.

Further detail features of the leaf-remover head of the invention are specified in the corresponding dependent claims.

The invention concerns a leaf-remover head provided with a support body having an inlet mouth for the inlet of air, a containment element which delimits a cavity in communication with the inlet mouth, and a first portion rotatably associated with the support body according to a rotation axis, the first portion being provided with an outlet mouth which is in communication with the cavity and is arranged eccentrically with respect to the rotation axis, wherein the containment element has the shape of a circular-profiled drum whose axis is coaxial to the rotation axis and is that provided with an inlet hole and an outlet hole arranged in communication with, respectively, the inlet mouth and the outlet mouth.

Some embodiments of the invention may envisage a drum defined by a front disc-shaped element and a rear disc-shaped element mutually connected by a tubular element, the outlet and inlet holes belonging to, respectively, the front and rear disc-shaped elements.

Further embodiments of the invention may envisage a drum made in a single body.

Further embodiments of the invention may envisage that the outlet mouth belongs to a nozzle arranged inside the cavity of the drum, the nozzle being preferably removable.

Advantageously, since the cavity of drum has a noticeably bigger volume compared to that of the ducts used in the known-type leaf-remover heads, it allows to reduce the air velocity between the inlet mouth and the outlet mouth, thereby considerably reducing the relating pressure losses.

Still advantageously, the use of a circular drum coaxial to the rotation axis considerably reduces the risks of damaging the plants and injuring the operators, due to the limitation in the presence of projecting parts on which leaves or other foreign bodies might get caught during rotation of the drum itself.

A similar advantage is achieved by arrangement of the nozzle inside the cavity of the drum.

Still advantageously, the removable nozzle can be replaced when worn, thus avoiding the need of replacing the entire head.

The above aims and advantages, together with others that will be mentioned hereinafter, will appear more evidently from the following description of some preferred embodiments of the invention, that are explained for exemplary and nonlimiting purpose with the aid of the attached drawings.

### Brief description of the drawings

Fig. 1 depicts the leaf-remover head of the invention, in axonometric view.
Fig. 2 depicts the head of Fig. 1, in axonometric view according to a different angle.
Fig. 3 depicts the head of Fig. 1, in cross-sectioned view according to plane III-III of Fig. 1.
Fig. 4 depicts detail A of Fig. 3, in magnified view.

### Detailed description of some preferred embodiments

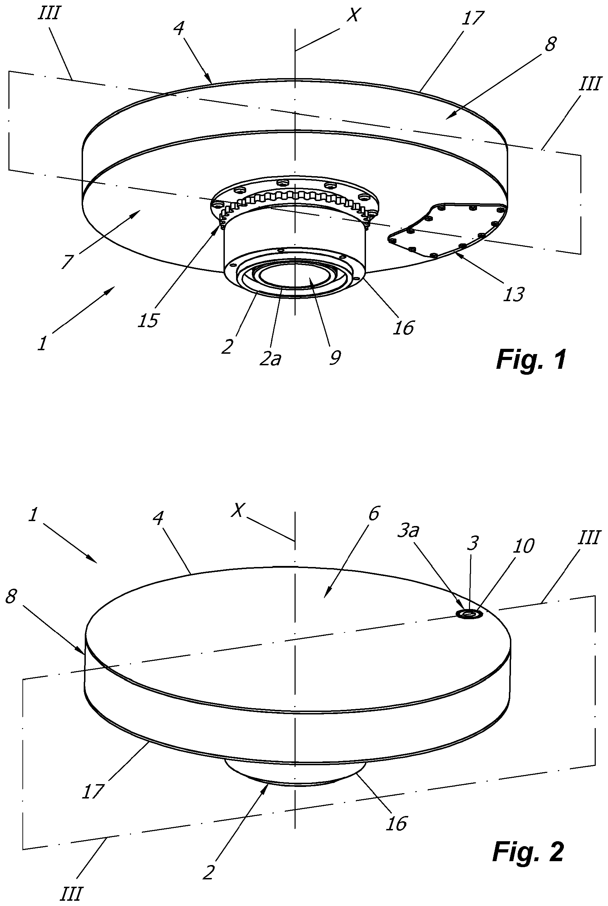

The leaf-remover head of the invention, indicated in Fig. 1 in its whole with **1**, comprises a support body **16** for connecting the head **1** to an agricultural machine, that is not shown in the drawings but is in itself known.

The support body **16** is provided with an inlet mouth **2** for connecting the head **1** to an air-feeding unit, not shown in the drawings but is in itself known. The air-feeding unit may be, for example, a compressor, that may be driven by the above agricultural machine.

Preferably, the above mentioned air-feeding unit is connected to the inlet mouth **2** of head **1** through a duct, not shown in the drawings, whose two ends are associated to, respectively, the support body **16** and the air-feeding unit.

The head **1** further comprises a containment element **4** which delimits a cavity **9** in communication with the above inlet mouth **2**.

A first portion of the containment element **4** is rotatably associated to the support body **16** according to a rotation axis **X**. The above mentioned first portion comprises an outlet mouth **3** in communication with the cavity **9**, and shown for example in Fig. 2.

Due to the pressure gap between the cavity **9** and the external environment, the air flows from the cavity **9** itself towards the outside through the above mentioned outlet mouth **3**, hence generating a corresponding air jet.

The outlet mouth **3** is arranged eccentrically with respect to the rotation axis **X**, in such a way that, due to the rotation of the first portion around the rotation axis **X**, the outlet mouth 3 travels along a circular trajectory that is concentric to the same axis. Due to the above mentioned movement of the outlet mouth **3** around the rotation axis **X**, the air jet exerts, in correspondence with any fixed point close to the outlet mouth **3**, an intermittent thrust capable of causing the defoliating action.

Preferably, the outlet mouth **3** is sufficiently distant from the rotation axis **X** that the latter does not intersect it, in such a way that, during its movement according to the above mentioned circular trajectory, the outlet mouth **3** sweeps an area shaped as an annulus.

The head **1** is configured in such a way that the above mentioned air jet has a flow rate and a velocity such as to achieve an effective defoliating action. That is obtained, in particular, by suitably choosing the air pressure at the inlet mouth **2** and of the section area of the outlet mouth **3**.

Preferably, the above mentioned containment element **4** is airtight, so that the pressurized air is allowed to exit from the cavity **9** only through the outlet hole **3a**.

It is hereby specified that the following disclosure and the drawings make reference to a configuration in which the first portion of the containment element **4** that is rotatably mounted according to the rotation axis **X** coincides with the entire containment element **4**, that hence rotates as a single body.

Nevertheless, the following description is applicable, with the due and evident changes, also to variant embodiments in which, instead, a second portion of the containment element **4** is integral with the support body **16**, the first portion being then limited to the remaining portion of the containment element **4**. In the latter case, the rotation of the containment element **4** mentioned hereinafter is to be construed as being the rotation of the first portion only.

With more specific regards to the containment element **4**, it is configured as a drum **17**, whose outer edge has a circular profile having an axis that is coaxial to the rotation axis **X**. The drum **17** is provided with an inlet hole **2a** in communication with the inlet mouth **2** and an outlet hole **3a** in communication with the outlet mouth **3**.

In the configuration just disclosed, the cavity **9** has a generally cylindrical shape coaxial to the rotation axis **X**, hence its volume is much bigger compared to that of the ducts of the leaf-remover heads of known type having same effectiveness. In fact, the drum **17** is comparable to a tank containing air at a substantially uniform and constant pressure. Therefore, the velocity of the air between the two mouths **2**, **3** is negligible and, anyway, much lower compared to the velocity in the ducts of the leaf-remover heads of known type, with the consequence that the pressure losses between the two mouths **2**, **3** are greatly limited, thus achieving the aim of limiting the energy needed to ensure the required air flow rate.

Moreover, by virtue of its being circular in shape and coaxial to the rotation axis **X**, the drum **17** is substantially devoid of projecting elements, so as to prevent the leaves and the operators' clothes from getting caught on the drum **17** itself, with consequent risks when the drum **17** is made rotating. Therefore, the head **1** achieves the further aims of reducing the risks of damages and injuries to the operators.

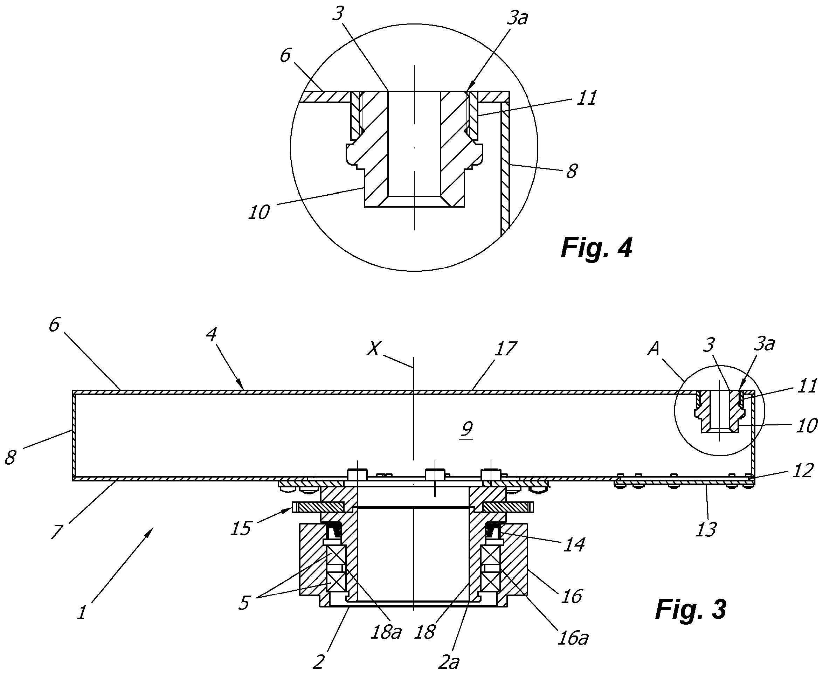

As can be seen in Fig. 3, preferably the outlet mouth **3** belongs to a nozzle **10** that is integral with the drum **17** and that, in particular, is associated to the outlet hole **3a**. Advantageously, the nozzle **10** allows to precisely control the direction and the velocity of the air jet that exits the outlet mouth **3**.

Preferably, the nozzle **10** is arranged inside the cavity **9**, which advantageously avoids generating projections on the drum **17**.

Preferably, and as can be seen more in detail in Fig. 4, the nozzle **10** is associated to the drum **17** through removable fixing elements **11**, that advantageously allow the replacement of the nozzle **10** when it is worn. Still preferably, the fixing elements **11** comprise screw means, for example a threaded sleeve welded to the drum **17** on which a corresponding threaded surface belonging to the nozzle **10** is screwed.

Preferably, the drum **17** further comprises an access opening **12** that belongs to a wall of the drum **17** itself, the wall being opposite to the outlet mouth **3**. The above mentioned access opening **12** is arranged facing the nozzle **10** in order to allow the removal of the latter from the drum **17**. Moreover, the access opening **12** is closed by a cover **13** removably associated to the drum **17**, that ensures the air tightness of the latter in operating configuration.

According to a variant embodiment of the invention, that is not shown in the drawings, the head **1** comprises a plurality of outlet mouths **3**, arranged at respective angular positions around the rotation axis **X**, and/or at respective distances from the rotation axis **X**, and that may be mutually identical or mutually different according to the producer's choice. What was mentioned previously is applicable to each of the above mentioned outlet mouths **3**.

Some of the above mentioned outlet mouths **3** may be arranged at the same distance from the rotation axis **X**, and at uniform mutual angular distances around the rotation axis **X**. The configuration just disclosed implies an increase in the intermittence frequency of the air jet compared to the case of a single outlet mouth **3**, given the same angular rotation of the containment element **4**.

According to a variant embodiment of the invention, some of the above mentioned outlet mouths **3** may be arranged at mutually different corresponding distances from the rotation axis **X**, in such a way as to generate corresponding air jets acting at different distances from the rotation axis **X** itself, thus bringing the advantage to cover a wider operating area.

According to a further variant embodiment of the invention, one or more of the above mentioned outlet mouths **3** may be closed by the operator by means of suitable removable covers, in order to render the head **1** adaptable to the specific operating needs of each use.

By virtue of the use of the above mentioned drum **17**, the increase in the number of outlet mouths **3** affects only to a limited extent on the constructional complexity of the head **1**, and, hence, on its cost. In fact, all the outlet mouths **3** may be connected to the same drum **17**, being it enough to provide the latter with a corresponding number of outlet holes **3a**. On the contrary, the addition of a further outlet mouth **3** in a leaf-remover head of known type requires the provision of a corresponding additional duct to convey the air from the inlet mouth **2** to the above mentioned further outlet mouth **3**, with the consequence of increasing the constructional complexity of the head and its cost.

As regards the structure of the drum **17**, preferably, and as can be seen in Fig. 3, the drum is defined by a front disc-shaped element **6** to which the outlet hole **3a** belongs, a rear disc-shaped element **7** facing the front disc-shaped element **6** and distanced thereof according to the direction of the rotation axis **X**, to which the said inlet hole **2a** belongs, and a tubular element **8** connecting the front disc-shaped element **6** to the rear disc-shaped element **7** at the corresponding perimeter edges in order to delimit the cavity **9**. The three elements **6**, **7** and **8** are mutually fixed in order that the drum **17** is a single body, of which the two disc-shaped elements **6**, **7** delimit two opposite walls and the tubular element **8** defines the lateral wall.

Both the front disc-shaped element **6** and the rear disc-shaped element **7** may be planar and the tubular element **8** may be cylindrical, in which case the drum **17** takes the shape of a cylinder.

According to a variant embodiment of the invention, one or more of the three above mentioned elements **6**, **7** and **8** may have corresponding cavities facing outward of the cavity **9**, in which case the drum **17** takes the shape of a rounded cylinder.

Preferably, the front disc-shaped element **6**, the rear disc-shaped element **7**, and the tubular element **8** are laminar elements, for example they are corresponding portions of metallic sheet.

Preferably, the head **1** comprises one or more roll bearings **5**, shown in Fig. 3, for the rotary connection of the drum **17** to the support body **16**. Preferably, the support body **16** defines an inner cylindrical surface **16a** coaxial to the rotation axis **X** for coupling to the above mentioned roll bearings **5**. Still preferably, the drum **17** comprises a collar **18** extending outwardly of the drum **17** itself according to the direction of the rotation axis **X** and defining an outer cylindrical surface **18a**, coaxial to the rotation axis **X** and facing the above mentioned inner cylindrical surface **16a**, for coupling the drum **17** to the roll bearings **5.**

Still preferably, sealing devices **14** are provided to prevent air from passing between the support body **16** and the drum **17** in the area where the latter are rotatably coupled one to another. The above mentioned sealing devices **14** may comprise, for example, a gasket in elastomeric material, for example a V-Ring.

Preferably, the head **1** further comprises a teeth **15** integral with the first rotating portion of the containment element **4** and suited to engage a toothed transmission element, not shown in the drawings, that may be, for example, a gear, a toothed belt, a chain, or whatever element having an equivalent function.

Motorization means, not shown in the drawings but in themselves known, impart the drum **17** a rotation with respect to the support body **16** according to the rotation axis **X**, the motorization means acting through of the above mentioned teeth **15** and the above mentioned toothed transmission element.

As previously anticipated, according to a variant embodiment of the invention, not shown in the drawings, the first portion of the containment element **4** that is rotatably mounted on the support body **16** according to the rotation axis **X** does not involve the entire containment element **4**, but is limited to only a part of it. The above disclosure equally applies, with the due and evident changes, to this variant embodiment.

The above variant embodiment may envisage sealing elements, for example a gasket, interposed between the first portion and the remaining portion of the containment element **4** to prevent air from exiting between the two above mentioned portions.

For example, the rear disc-shaped element **7**, and possibly the tubular element **8**, may be both integral with the support body **16**, so that the above mentioned rotating first portion is limited to the front disc-shaped element **6** only.

Operatively, the leaf-remover head **1** disclosed above is associated to an agricultural machine by means of the support body **16**, and the inlet mouth **2** is put in communication with the air feeding device by means of a duct.

The activation of the motorization means allows to bring the first portion of the containment element **4** in rotation in order to impart to the outlet mouth **3** a motion according to a circular trajectory around the rotation axis **X**. This causes a corresponding movement of the air jet that, as previously explained, generates a defoliating action.

From what described above, it is understood that the leaf-remover head of the invention achieves the intended aims.

In particular, the use of a drum coaxial to the rotation axis and to which both the air inlet and outlet mouths belong, allows to limit the air velocity between the two mouths, hence bringing a corresponding limitation in the energy consumption compared to the leaf-remover heads of known type having the same performances.

Moreover, using the above mentioned drum limits the presence of projecting parts, on which foreign bodies could be caught during the operation of the head, in order to limit the risk of injury to the operators and damage to the plants and fruits during the leaf removal.

Moreover, the use of a drum to replace the ducts typical of leaf-remover heads of known type allows to render the head of the invention constructively very simple, hence feasible at a lower cost compared to the leaf-remover heads of known type having the same performances.

The invention is susceptible to changes and variant embodiments, all of which falls within the inventive concept expressed in the attached claims. In particular, the elements of the invention may be replaced by other elements technically equivalent thereof.

Moreover, the materials may be chosen according to the needs, yet without departing from the scope of the invention.

When technical elements specified in the claims are followed by reference signs, those reference signs are included for the sole purpose of improving intelligibility of the invention, hence they do not imply any limitation of the claimed scope of protection.

## Claims

1. Leaf-remover head (1) comprising:
- a support body (16);
- an inlet mouth (2) belonging to said support body (16) for connection to an air-feeding unit;
- a containment element (4) delimiting a cavity (9) in communication with said inlet mouth (2), at least a first portion of said containment element (4) being rotatably associated to said support body (16) according to a rotation axis (X);
- an outlet mouth (3) belonging to said first portion, arranged eccentrically with respect to said rotation axis (X) and in communication with said cavity (9);
**characterized in that** said containment element (4) is a drum (17) having a circular profile whose axis is coaxial to said rotation axis (X), said drum (17) being provided with an inlet hole (2a) in communication with said inlet mouth (2) and of an outlet hole (3a) in communication with said outlet mouth (3).

2. Leaf-remover head (1) according to claim 1, **characterized in that** said drum (17) comprises:
- a front disc-shaped element (6) to which said outlet hole (3a) belongs;
- a rear disc-shaped element (7) facing said front disc-shaped element (6) and arranged at a distance from said front disc-shaped element (6) according to the direction of said rotation axis (X), to which said inlet hole (2a) belongs;
- a tubular element (8) connecting said front disc-shaped element (6) to said rear disc-shaped element (7) so as to delimit said cavity (9).

3. Leaf-remover head (1) according to claim 2, **characterized in that** said front disc-shaped element (6), said rear disc-shaped element (7) and said tubular element (8) are respective metal-sheet portions.

4. Leaf-remover head (1) according to any claim 2 or 3, **characterized in that** said front disc-shaped element (6), said rear disc-shaped element (7) and said tubular element (8) belong to said first portion and are mutually fixed so as to form a single body.

5. Leaf-remover head (1) according to any claim from 1 to 4, **characterized in that** said outlet mouth (3) belongs to a nozzle (10) arranged inside of said cavity (9) and integral with said first portion.

6. Leaf-remover head (1) according to claim 5, **characterized in that** said nozzle (10) is associated with said first portion through removable fixing elements (11).

7. Leaf-remover head (1) according to claim 6, **characterized in that** said drum (17) comprises an access opening (12) belonging to a wall of said drum (17) opposite to said outlet mouth (3), said access opening (12) facing said nozzle (10) to allow removal of said nozzle (10) from said drum (17) and being closed by a cover (13) removably associated with said drum (17).

8. Leaf-remover head (1) according to any claim from 1 to 7, **characterized in that** said first portion is rotatably associated to said support body (16) through a roll bearing (5).

9. Leaf-remover head (1) according to any preceding claim, **characterized in that** it comprises sealing devices (14) to prevent air to pass between said support body (16) and said first portion.

10. Leaf-remover head (1) according to any preceding claim, **characterized in that** it comprises motorization means for the rotation of said first portion with respect to said support body (16) according to said rotation axis (X).

11. Leaf-remover head (1) according to any preceding claim, **characterized in that** air flows from said cavity (9) towards the outside through said outlet mouth (3) due to the pressure gap between said cavity (9) and the external environment.

12. Leaf-remover head (1) according to any preceding claim, **characterized in that** said cavity (9) has a generally cylindrical shape coaxial to said rotation axis (X).

13. Leaf-remover head (1) according to any preceding claim, **characterized in that** said containment element (4) is airtight, so that the pressurized air is allowed to exit from said cavity (9) only through said outlet hole (3a).

## Patentansprüche

1. Entlauberkopf (1) bestehend aus:
- einem Stützkörper (16);
- einer zum besagten Stützkörper (16) gehörenden Einlassmündung (2) zum Anschluss an eine Luftzuführungseinheit;
- einem Behälter (4), der einen Hohlraum (9) umschließt, der mit der besagten Einlassmündung (2) verbunden ist, wobei zumindest der erste Teil des Behälters (4) mit besagtem Stützkörper (16) um eine Rotationsachse (X) drehbar verbunden ist;
- einer Auslassmündung (3) des besagten ersten Teils, die zur besagten Rotationsachse (X) exzentrisch angeordnet ist und mit dem besagten Hohlraum (9) in Verbindung steht;
**dadurch gekennzeichnet, dass** jener Behälter (4) eine Trommel (17) mit einem Rundprofil ist, deren Achse zur besagten Rotationsachse (X) koaxial ist, wobei die besagte Trommel (17) mit einem Einlassloch (2a) versehen ist, das mit der besagten Einlassmündung (2) in Verbindung steht, sowie mit einem Auslassloch (3a), das mit der besagten Auslassmündung (3) in Verbindung steht.

2. Entlauberkopf (1) nach Anspruch 1, **dadurch gekennzeichnet, dass** die besagte Trommel (17) folgendes umfasst:
- ein vorderseitiges scheibenförmiges Element (6), zu dem besagtes Auslassloch (3a) gehört;
- ein rückseitiges scheibenförmiges Element (7), das dem vorderseitigen scheibenförmigen Element (6) gegenüberliegt und vom besagten vorderseitigen scheibenförmigen Element (6) in Richtung der Drehachse (X) einen gewissen Abstand aufweist, und zu dem das Einlassloch (2a) gehört;
- ein rohrförmiges Element (8), das die Verbindung zwischen besagtem vorderseitigen scheibenförmigen Element (6) mit dem besagten rückseitigen scheibenförmigen Element (7) herstellt, um den besagten Hohlraum (9) zu bilden.

3. Entlauberkopf (1) nach Anspruch 2, **dadurch gekennzeichnet, dass** das besagte vorderseitige scheibenförmige Element (6), das besagte rückseitige scheibenförmige Element (7) und das besagte rohrförmige Element (8) aus Metallblech hergestellt sind.

4. Entlauberkopf (1) nach irgendeinem der Ansprüche 2 oder 3, **dadurch gekennzeichnet, dass** das besagte vorderseitige scheibenförmige Element (6), das besagte rückseitige scheibenförmige Element (7) und das besagte rohrförmige Element (8) zum besagten ersten Teil gehören und gegenseitig befestigt sind, um einen einzelnen Körper zu bilden.

5. Entlauberkopf (1) nach irgendeinem der Ansprüche 1 bis 4, **dadurch gekennzeichnet, dass** die besagte Auslassmündung (3) zu einem Stutzen (10) gehört, der im Inneren des besagten Hohlraums (9) angeordnet ist und Bestandteil des besagten ersten Teils ist.

6. Entlauberkopf (1) nach Anspruch 5, **dadurch gekennzeichnet, dass** besagter Stutzen (10) mit dem besagten ersten Teil durch abnehmbare Befestigungselemente (11) verbunden ist.

7. Entlauberkopf (1) nach Anspruch 6, **dadurch gekennzeichnet, dass** besagte Trommel (17) an einer der besagten Auslassmündung (3) gegenüberliegenden Wand der gesagten Trommel (17) mit einer Zugriffsöffnung (12) versehen ist, die dem besagten Stutzen (10) gegenüberliegt, um das Ausbauen des besagten Stutzens (10) aus der besagten Trommel (17) zu ermöglichen, wobei besagte Zugriffsöffnung (12) mit einer von der besagten Trommel (17) abnehmbaren Abdeckung (13) versehen ist.

8. Entlauberkopf (1) nach irgendeinem der Ansprüche 1 bis 7, **dadurch gekennzeichnet, dass** besagter erster Teil mit besagtem Stützkörper (16) mittels eines Rollenlagers (5) drehbar verbunden ist.

9. Entlauberkopf (1) nach irgendeinem der vorhergehenden Ansprüche **dadurch gekennzeichnet, dass** er Dichtungsvorrichtungen (14) enthält, um den Luftdurchgang zwischen besagtem Stützkörper (16) und besagtem ersten Teil zu verhindern.

10. Entlauberkopf (1) nach irgendeinem der vorhergehenden Ansprüche **dadurch gekennzeichnet, dass** er Antriesbsmittel enthält, für die Rotation des besagten ersten Teils gegenüber dem besagten Stützkörper (16), um die besagte Rotationsachse (X).

11. Entlauberkopf (1) nach irgendeinem der vorhergehenden Ansprüche, **dadurch gekennzeichnet, dass** Luft aus dem besagten Hohlraum (9) durch die besagte Auslassmündung (3) nach außen entweicht, aufgrund des Druckgefälles zwischen besagtem Hohlraum (9) und der äußeren Umgebung.

12. Entlauberkopf (1) nach irgendeinem der vorhergehenden Ansprüche, **dadurch gekennzeichnet, dass** besagter Hohlraum (9) eine allgemein zylindrische Form hat, die zur besagten Rotationsachse (X) koaxial ist.

13. Entlauberkopf (1) nach irgendeinem der vorhergehenden Ansprüche, **dadurch gekennzeichnet, dass** besagter Behälter (4) luftdicht ist, so dass die Druckluft aus besagtem Hohlraum (9) nur durch besagtes Auslassloch (3a) entweichen kann.

## Revendications

1. Tête à effeuiller (1) comprenant:
- un corps du bâti (16);
- une embouchure d'entrée (2) appartenant au ledit corps du bâti (16) pour le raccordement à un dispositif d'alimentation en air;
- un élément conteneur (4) délimitant une cavité (9) en communication avec ladite embouchure d'entrée (2), avec au moins une première portion de ledit élément conteneur (4) raccordée en rotation au ledit corps du bâti (16) selon un axe de rotation (X);
- une embouchure de sortie (3), appartenant à ladite première portion, en position excentrique par rapport à ledit axe de rotation (X) et en communication avec ladite cavité (9);
**caractérisé en ce que** ledit élément conteneur (4) est un tambour (17) ayant un profil circulaire dont l'axe est coaxial à ladit axe de rotation (X), ladit tambour (17) étant muni d'un orifice d'entrée (2a) en communication avec ledite embouchure d'entrée (2) et d'un orifice de sortie (3a) en communication avec ledite embouchure de sortie (3).

2. Tête à effeuiller (1) selon la revendication 1, **caractérisé en ce que** ledit tambour (17) comprend:
- un élément antérieur en forme de disque (6) auquel ledit orifice de sortie (3a) appartient;
- un élément postérieur en forme de disque (7) faisant face audit élément antérieur en forme de disque (6), placé à une distance dudit élément antérieur en forme de disque (6) selon la direction dudit axe de rotation (X), auquel ledit orifice d'entrée (2a) appartient;
- un élément tubulaire (8) connectant ledit élément antérieur en forme de disque (6) à ledit élément postérieur en forme de disque (7), de façon à délimiter ladite cavité (9).

3. Tête à effeuiller (1) selon la revendication 2, **caractérisé en ce que** ledit élément antérieur en forme de disque (6), ledit élément postérieur en forme de disque (7) et ledit élément tubulaire (8) sont des portions de tôle métallique respectivement.

4. Tête à effeuiller (1) l'une quelconque des revendications 2 ou 3, **caractérisé en ce que** ledit élément antérieur en forme de disque (6), ledit élément postérieur en forme de disque (7) et ledit élément tubulaire (8) appartiennent à ladite première portion et sont fixés les uns aux autres de manière à former un seul corps.

5. Tête à effeuiller (1) selon l'une quelconque des revendications de 1 à 4, **caractérisé en ce que** ladite embouchure de sortie (3) appartient à une buse (10) placé dans la cavité susdite (9) et solidaire de ladite première portion.

6. Tête à effeuiller (1) selon la revendication 5, **caractérisé en ce que** ladite buse (10) est associée à ladite première portion (11) par l'intermédiaire d'éléments de fixation amovibles.

7. Tête à effeuiller (1) selon la revendication 6, **caractérisé en ce que** ledit tambour (17) comprend une ouverture d'accès (12) appartenant à une paroi dudit tambour (17) opposée a ladite embouchure de sortie (3), ladite ouverture d'accès (12) faisant face à ladite buse (10) pour permettre le retrait de ladite buse (10) dudit tambour (17) et étant fermée par un couvercle (13) associé de manière amovible audit tambour (17).

8. Tête à effeuiller (1) selon l'une quelconque des revendications de 1 à 7, **caractérisé en ce que** ladite première portion est associée en rotation audit corps du bâti (16) par l'intermédiaire d'un roulement à rouleaux (5).

9. Tête à effeuiller (1) selon l'une quelconque des revendications précédentes, **caractérisé en ce qu'**elle comprend des dispositifs d'étanchéité (14) pour empêcher l'air de passer entre ledit corps du bâti (16) et ladite première portion.

10. Tête à effeuiller (1) selon l'une quelconque des revendications précédentes, **caractérisé en ce qu'**elle comprend des moyens de motorisation pour la rotation de ladite première portion par rapport audit corps du bâti (16) selon ledit axe de rotation (X).

11. Tête à effeuiller (1) selon l'une quelconque des revendications précédentes, **caractérisé en ce que** l'air de ladite cavité (9) s'échappe vers l'extérieur par ladite embouchure de sortie (3), en raison de la différence de pression entre ladite cavité (9) et l'environnement extérieur.

12. Tête à effeuiller (1) selon l'une quelconque des revendications précédentes, **caractérisé en ce que** ladite cavité (9) a une forme généralement cylindrique, coaxiale à ledit axe de rotation (X).

13. Tête à effeuiller (1) selon l'une quelconque des revendications précédentes, **caractérisé en ce que** ledit élément conteneur (4) est étanche à l'air, de façon à ce que l'air pressurisé ne puisse sortir de ladite cavité (9) que par ledit orifice de sortie (3a).
